# EUROPEAN PATENT SPECIFICATION

(11) **EP 4 445 237 B1**
(45) Date of publication and mention of the grant of the patent: **08.10.2025**
(21) Application number: 22826827.2
(22) Date of filing: 07.12.2022
(51) Int. Cl.: G05D 23/19, G05D 23/22, G01K 7/026

(54) **TEMPERATURE MONITORING SYSTEM**
TEMPERATURÜBERWACHUNGSSYSTEM
SYSTÈME DE SURVEILLANCE DE TEMPÉRATURE

(30) Priority: 08.12.2021 GB 202117744
(43) Date of publication of application: 16.10.2024
(73) Proprietor: Micromass UK Limited, Cheshire SK9 4AX (GB)
(72) Inventor: MOULDS, Richard, Wilmslow Cheshire SK9 4AX (GB)
(74) Representative: Forresters IP LLP
(86) International application number: PCT/GB2022/053108
(87) International publication number: WO 2023/105214

(56) References cited:
- WO-A1-2010/136827
- US-A- 3 778 581

## Description

### FIELD

The present invention relates to a temperature monitoring system, and more particularly to a temperature monitoring system for use with a thermocouple and a heater control system in a mass spectrometry system.

### BACKGROUND

A mass spectrometer typically comprises components which operate at a high voltage and a high temperature. For example, a heater is provided to heat components which operate at a high voltage in mass spectrometry devices, such as an electrospray ionisation (ESI) device, a desorption electrospray ionisation (DESI) device or an acoustic droplet transfer line device.

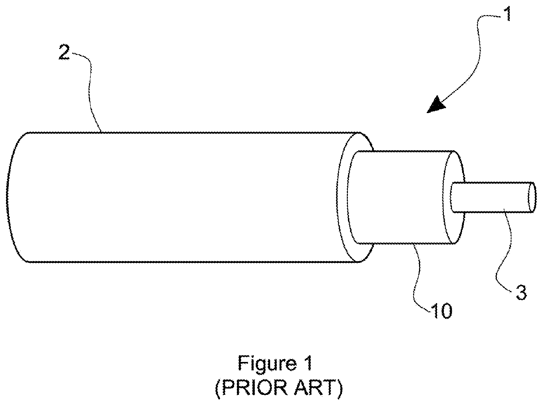

Figure 1 of the accompanying drawings shows an example of a heater 1 for use in a mass spectrometry system. The heater 1 comprises an elongate and generally-cylindrical outer jacket 2 which is heated by a heating element 3.

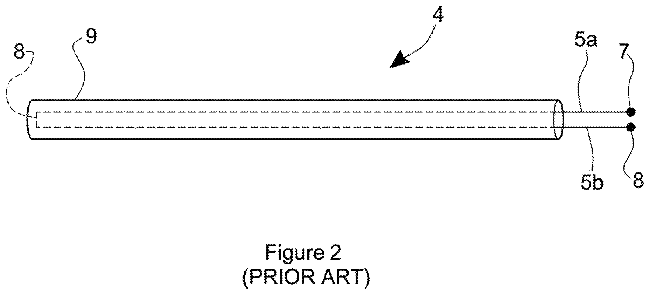

Figure 2 shows a thermocouple 4 which is configured to sense the temperature of an item (not shown) which is being heated by the heater 1. The thermocouple 4 comprises a first elongate conductor 5a and a second elongate conductor 5b which extend along the length of the thermocouple 4. The first and second elongate conductors 5a, 5b are electrically connected together at one end at a connection 6. At the other end of the conductors 5a, 5b, the thermocouple 4 comprises a first terminal 7 which is provided at the free end of the first conductor 5a and a second terminal 8 which is provided at the free end of the second conductor 5b. In this example, the conductors 5a, 5b are partially enclosed within an elongate electrically insulating jacket 9. The electrically insulating jacket 9 is typically of magnesium oxide or another suitable electrically insulating and heat resistant material.

The heater 1 is provided with an electrically insulating layer 10 which surrounds the heating element 3 and electrically insulates the outer jacket 2 from the heating element 3.

When the heater 1 is in use in a mass spectrometer or an inlet device for a mass spectrometer, it is often desirable to attach the outer jacket 2 of the heater 1 to an object which is at a high voltage of several hundred volts. The electrically insulating jacket 9 of the thermocouple 4 is typically also attached to the object in order to measure the temperature of the object. The electrically insulating jacket 9 electrically insulates the conductors 5a, 5b of the thermocouple 4 from the high voltage. Consequently, the electrically insulating jacket 9 minimises the risk of the high voltage inducing a leakage current in the conductors 5a, 5b which may affect the accuracy at which the thermocouple 4 can measure the temperature of the object.

When the electrically insulating jacket 9 is functioning as intended, the risk of a leakage current in the conductors 5a, 5b is minimised. However, a problem can occur if the electrically insulating jacket 9 inadvertently becomes conductive. This can occur over time as the electrically insulating jacket 9 degrades due to being heated to high temperatures repeatedly or when the electrically insulating jacket 9 is exposed to humidity. For instance, magnesium oxide in the electrically insulating jacket 9 is inherently hygroscopic and this can result in the magnesium oxide absorbing water from the air over time and becoming electrically conductive. This can occur when the thermocouple 4 is in storage, before the thermocouple 4 is even installed in a mass spectrometry system.

If the electrically insulating jacket 9 becomes conductive, the high voltage of the object can induce a leakage current in the conductors 5a, 5b of the thermocouple 4. The leakage current raises or lowers the voltage across the conductors 5a, 5b which in turn can cause a heater control circuit which is connected to the thermocouple 4 to misread the temperature of the thermocouple 4. This can result in the heater control circuit controlling the heater 1 to operate at an incorrect temperature.

The consequence of a leakage current in the thermocouple 4 can be minimal if the leakage current is small, since the accuracy of the temperature measurement of the thermocouple 4 will be minimally affected. However, a larger leakage current will affect the accuracy of temperature measurement of the thermocouple 4 significantly, which may lead a heater control circuit to control the heater 1 to operate at a far higher temperature than intended. This may lead to catastrophic damage in the mass spectrometer and a possible fire or burn risk.

It has been proposed previously to mitigate the above-mentioned problem by providing additional insulation around the thermocouple 4. However, the additional insulation has the undesirable effect of increasing the size, complexity and cost of the thermocouple 4.

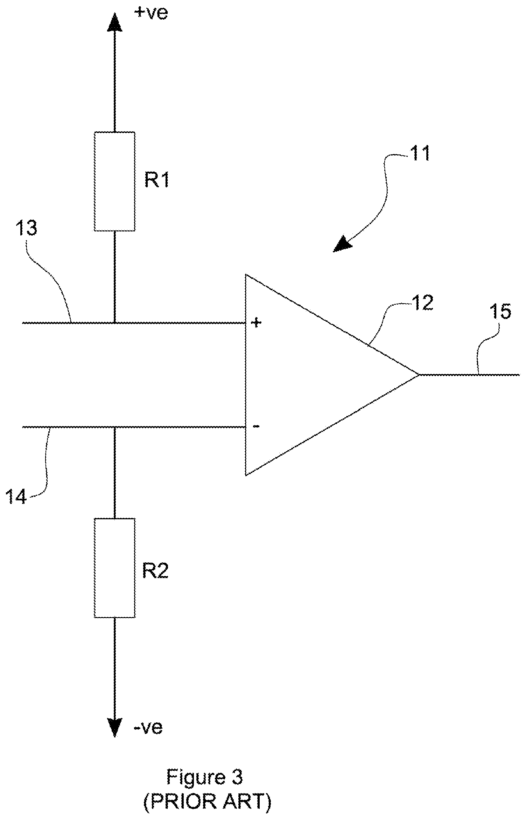

Referring now to figure 3 of the accompanying drawings, a conventional thermocouple measurement circuit 11 comprises a differential amplifier 12 having a non-inverting input 13 and an inverting input 14. The free ends 7, 8 of the conductors 5a, 5b of the thermocouple 4 are connected electrically to the respective non-inverting and inverting inputs 13, 14 of the differential amplifier 12. In use, the differential amplifier 12 amplifies a difference between the voltages of the first and second conductors 5a, 5b and provides an output signal via an output 15. The output signal is used to control the heater 1 to activate or deactivate the heater 1 such that the heater 1 operates at a predetermined temperature.

A resistor R1 is connected electrically between the non-inverting input 13 and a positive voltage power rail. A resistor R2 is connected electrically between the inverting input 14 and a negative voltage power rail. The resistors R1, R2 are provided in order to protect the thermocouple measurement circuit 11 from malfunctioning in the event that the thermocouple 4 goes open circuit, such that one or both of the conductors 5a, 5b becomes electrically disconnected from the differential amplifier 12. In a conventional thermocouple measurement circuit, the resistors R1, R2 are selected to be a high value, such as 1MΩ.

While the resistors R1, R2 provide effective protection from a malfunction due to the thermocouple 3 going open circuit, the high value of the resistors R1, R2 makes the temperature monitoring system 11 susceptible to leakage currents which may be induced by the high voltage of the heater 1, as described above. For example, the high values of the resistors R1, R2 mean that small leakage currents will drive the voltage at the instrumentation input beyond its working range.

Conversely, reducing the values of the resistors R1, R2 causes a significant current to pass from one power rail to the other via the thermocouple 4. This has the undesirable effect of generating a significant voltage across the thermocouple 4, mimicking a temperature that is related to the current rather than the actual temperature of the object being measured by the thermocouple 4.

The present invention seeks to provide a temperature monitoring system which alleviates at least some of the problems outlined herein.

US 3 778 581 discloses an a-c power supply for use in a reflow soldering system.

### BRIEF DESCRIPTION OF THE INVENTION

The present invention provides a temperature monitoring system as claimed in claim 1, an integrated circuit as claimed in claim 7, a heating apparatus as claimed in claim 8, an electrospray ionisation source as claimed in claim 10 and a mass spectrometry system as claimed in claim 11.

The present invention also provides preferred embodiments as claimed in the dependent claims.

The temperature monitoring system of an example of this disclosure provides an output signal which is always indicative of a temperature which is at or above the true temperature of a heater which is being controlled by the temperature monitoring system. This ensures that the temperature monitoring system controls the temperature of the heater at or below a predetermined safe temperature and never above the predetermined safe temperature. This minimises the risk of the temperature monitoring system controlling a heater to operate at an excessively high temperature which might otherwise cause catastrophic damage and present a burn or fire risk.

A further benefit of the temperature monitoring system of an example of this disclosure is that the temperature monitoring system is configured to change its input impedance in response to the level of current flowing into or out from the inputs of the temperature monitoring system. This makes the temperature monitoring system significantly less susceptible to leakage currents than a conventional temperature monitoring system.

For example, the temperature monitoring system of an example of this disclosure lowers the impedance between one side of the thermocouple and a low voltage (e.g. ground or another voltage within the input range of the instrumentation amplifier). The fact that at least one side of the thermocouple is low impedance to ground (or other low voltage) is why the differential inputs do not exceed the input range of the amp when high voltage leakage occurs. The fact that only one of the thermocouple inputs is low impedance to the low voltage is why the quiescent current through the thermocouple is minimised. The fact that the circuit changes this impedance with leakage magnitude allows the circuit to remain functional over a wide leakage current range. The changing impedance also allows the system to detect when temperature accuracy is becoming significantly affected whilst still allowing functional heating to take place.

A further benefit of the temperature monitoring system of an example of this disclosure is that the temperature monitoring system is configured to detect a leakage current flowing into or out from the thermocouple and to detect the level of the leakage current. This enables the temperature monitoring system to output a leakage current value to a user which can be used to warn a user that the thermocouple and/or its surrounding electrical insulation has aged or deteriorated and requires replacement.

A yet further benefit of the temperature monitoring system of an example of this disclosure is that the temperature monitoring system never disables the heater because the temperature monitoring system always controls the heater to operate at or below a safe predetermined temperature. Consequently, the heater remains functional, allowing thermocouples and heaters which are new but affected by moisture to be used safely for a period of time. This results in an additional benefit in that the heat applied by the heater may, over a period of time, drive out the moisture in the electrically insulating material, in turn reducing or eliminating the leakage current.

The temperature monitoring system of an example of this disclosure has an environmental benefit in that it minimises industrial waste by enabling thermocouples and heaters to be used safely, even when the electrical insulation between the heater and the thermocouple has partially degraded, for instance due to moisture.

### BRIEF DESCRIPTION OF THE FIGURES

In order that the present disclosure may be more readily understood, preferable embodiments thereof will now be described, by way of example only, with reference to the accompanying drawings, in which:
Figure 1 is a diagrammatic view of a conventional heater;
Figure 2 is a diagrammatic view of a conventional thermocouple;
Figure 3 is a circuit diagram of a conventional thermocouple measurement circuit;
Figure 4 is a circuit diagram of a temperature monitoring system of an example of the present disclosure which is connected to a thermocouple, a heater control system and a heater;
Figure 5 is a circuit diagram showing a leakage current flowing due to a positive voltage at an input of the temperature monitoring system of figure 4;
Figure 6 is a circuit diagram showing a leakage current flowing due to a positive voltage at an input of the temperature monitoring system of figure 4;
Figure 7 is a circuit diagram showing a leakage current flowing due to a negative voltage at an input of the temperature monitoring system of figure 4;
Figure 8 is a circuit diagram showing a leakage current flowing due to a negative voltage at an input of the temperature monitoring system of figure 4; and
Figure 9 is a circuit diagram showing the effect on the temperature monitoring system of figure 4 due to a thermocouple going open circuit.

### DETAILED DESCRIPTION OF THE DISCLOSURE

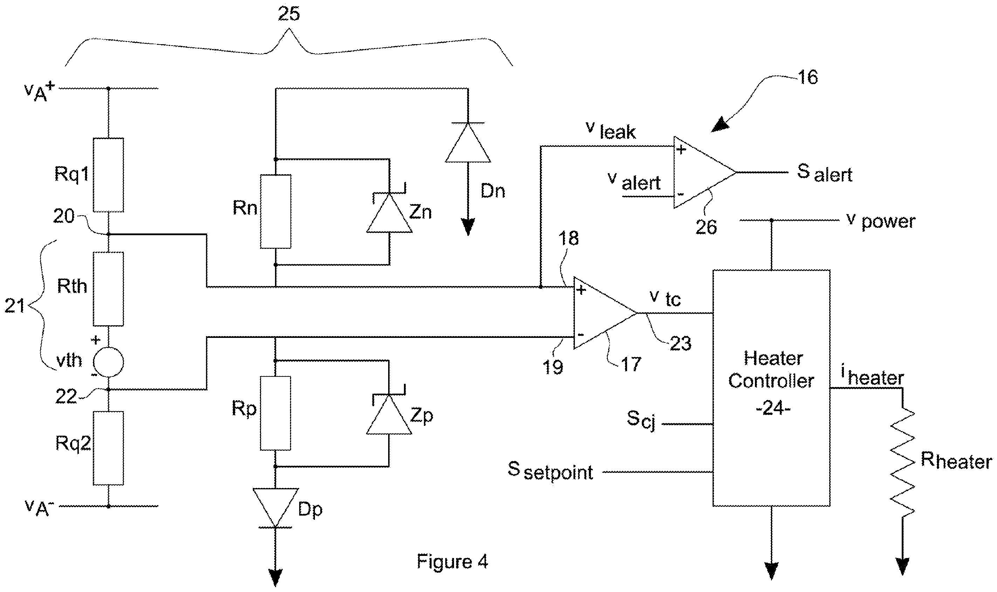

Referring now to figure 4 of the accompanying drawings, a temperature monitoring system 16 of an example of this disclosure comprises a differential amplifier 17 which incorporates a first input terminal 18 and a second input terminal 19. In this example, the first input terminal 18 is a non-inverting input terminal and the second input terminal is an inverting input terminal.

The first input terminal 18 is configured to connect to a first terminal 20 of a thermocouple 21 and the second input terminal 19 is configured to connect to a second terminal 22 of the thermocouple 21, as shown in figure 4. The thermocouple 21 is represented by a low value resistor Rth, typically of around 10Ω, and a voltage source Vth.

The differential amplifier 17 comprises an output terminal 23 which is configured to provide a temperature sense signal in the form of a temperature sense voltage Vtc to a heater controller 24. The heater controller 24 outputs a heater current iₕₑₐₜₑᵣ to control a heater Rₕₑₐₜₑᵣ, such as the heater 1 shown in figure 1.

The differential amplifier 17 is configured to generate the temperature sense signal in response to a difference between a first voltage at the first input terminal 18 and a second voltage at the second input terminal 19. The temperature sense voltage Vtc is proportional to the temperature difference between the tip of the thermocouple 4 and the cold junction of the thermocouple 4. In this example, Vtc ~ 40uV/°C and the non-inverting "+" input terminal 18 is positive with respect to the inverting "-" input terminal 19 when the tip of the thermocouple 4 is hotter than the cold junction of the thermocouple 4.

The temperature monitoring system 16 comprises a protection circuit 25 which is connected to the first input terminal 18 and the second input terminal 19. As will be described in more detail below, the protection circuit 25 is configured to operate in a first mode in the event that a leakage current flows into the first input terminal 18 or the second input terminal 19. The protection circuit 25 is configured to operate in a second mode in the event that a leakage current flows out from the first input terminal 18 or the second input terminal 19. When the protection circuit 25 is operating in the first mode or the second mode, the protection circuit 25 controls the differential amplifier 17 to output a temperature sense signal Vtc to the heater controller 24 which controls the heater Rₕₑₐₜₑᵣ to operate at a temperature at or below a predetermined temperature to reduce the risk of damage being caused by the heater.

The heater controller 24 measures the cold junction temperature S_{cj} of the thermocouple 4 and adds it to the temperature reported by the temperature monitoring system 16. The heater controller 24 then compares the result with a requested setpoint temperature Sₛₑₜₚₒᵢₙₜ. The control circuitry or logic in the heater controller 24 then determines if more or less power should be applied to the heater. The control circuitry will then alter the power supplied to the heater accordingly.

The protection circuit 25 comprises a first resistor Rₙ and a first diode Dₙ which are connected in series. The cathode of the first diode Dₙ is towards the positive terminal 20 of the thermocouple. A first terminal of the first diode Dₙ is connected to ground (or another voltage operating within the range of the inputs 18, 19 of the differential amplifier 17) and a second terminal of the first diode Dₙ is connected to a first terminal of the first resistor Rₙ. In this example, the first diode Dₙ is in the forward direction from ground (or another voltage operating within the range of the inputs 18, 19 of the differential amplifier 17) to the first resistor Rₙ such that the polarity of the first diode Dₙ is matched to the polarity of the first thermocouple input terminal 20. In another example, the direction of the first diode Dₙ may be reversed if the polarity of the thermocouple input terminals 20, 22 is reversed. A second terminal of the first resistor Rₙ is connected to the first input 18 of the differential amplifier 17.

The components of the protection circuit 25 which enable the protection circuit 25 to operate in the first and second modes will now be described.

The protection circuit 25 comprises a second resistor Rₚ and a second diode Dₚ. A first terminal of the second resistor Rₚ is connected to the second input 19 of the differential amplifier 17 and a second terminal of the second resistor Rₚ is connected to a first terminal of the second diode Dₚ. A second terminal of the second diode Dₚ is connected to ground (or another voltage operating within the range of the inputs 18, 19 of the differential amplifier 17). The cathode of the second diode Dₚ is towards ground.

In this example the second diode Dₚ is in the forward direction from the second resistor Rₚ to ground (or another voltage operating within the range of the inputs 18, 19 of the differential amplifier 17) such that the polarity of the second diode Dₚ is matched to the polarity of the second thermocouple input terminal 22. In another example, the direction of the second diode Dₚ may be reversed if the polarity of the thermocouple input terminals 20, 22 is reversed.

In an example of this disclosure, the protection circuit 25 is configured to operate in a third mode in the event that at least one of the first input terminal 18 or the second input terminal 19 is electrically disconnected from the thermocouple 21. When the protection circuit 25 is operating in the third mode, the protection circuit 25 controls the differential amplifier 17 to output a temperature sense signal which controls the heater controller 24 to control the heater Rₕₑₐₜₑᵣ, such as the heater 1 shown in figure 1, to switch off to reduce the risk of damage being caused by the heater. In this example, the protection circuit 25 outputs a signal Vtc corresponding to very high temperature (beyond the normal operating range). The heater controller 24 will then try to cool the heater Rₕₑₐₜₑᵣ (typically by switching off the power to the heater).

The components of the protection circuit 25 which enable the protection circuit 25 to operate in the third mode will now be described.

These components comprise a third resistor R_{q1} comprising a first terminal connected to a positive voltage power rail, which in this example is a +15V power rail. A second terminal of the third resistor R_{q1} is connected to the first input terminal 18 of the differential amplifier 17. A fourth resistor R_{q2} comprises a first terminal connected to the second input terminal 19 of the differential amplifier 17. A second terminal of the fourth resistor R_{q2} is connected to ground or a negative voltage power rail, which in this example is a -15V power rail.

In other examples, the protection circuit 25 is configured to operate in the third mode if the third resistor R_{q1} is connected to a power rail of any voltage which is higher than the voltage of the power rail connected to the fourth resistor R_{q2}.

It is, however, to be appreciated that the third resistor R_{q1} and the fourth resistor R_{q2} are optional and may be omitted from the protection circuit 25 in an example of this disclosure.

In this example, the protection circuit 25 comprises a first Zener diode Zₙ which is connected in parallel with the first resistor Rₙ. The first Zener diode Zₙ is connected in the forward direction from the first input 18 of the differential amplifier 17 to the first diode Dₙ.

In this example, the protection circuit 25 comprises a second Zener diode Zₚ which is connected in parallel with the second resistor Rₚ. The second Zener diode Zₚ is connected in the forward direction from the second diode Dₚ and the second input 19 of the differential amplifier 17.

It is to be appreciated that the first and second Zener diodes Zₙ, Zₚ or the first and second diodes Dₙ, Dₚ may be omitted from the protection circuit 25 of an example of this disclosure. However, the preferred arrangement comprises both the Zener diodes Zₙ, Zₚ and the first and second diodes Dₙ, Dₚ in pairs with the resistors Rₚ, Rₚ, as shown in figure 4.

In an example of this disclosure, at least some and preferably all of the components of the temperature monitoring system 16 are implemented within an integrated circuit which is configured to be connected to a circuit in which a leakage current is envisaged.

In another example of this disclosure, a heating apparatus comprises the temperature monitoring system 16, a heater such as the heater 1 shown in figure 1 and a thermocouple, such as the thermocouple 21 shown in figure 3.

In another example of this disclosure, an electrospray ionisation source comprises a heating apparatus as described above. In a further example of this disclosure a mass spectrometry system comprises a heating apparatus as described above.

In an example of this disclosure, the temperature monitoring system 16 comprises a monitoring circuit 26 which is connected to the first input terminals 18 (or alternatively the second input terminal 19) of the differential amplifier 17 to monitor the voltage Vₗₑₐₖ at the first input terminal 18. The monitoring circuit is configured to provide a monitor output signal Sₐₗₑᵣₜ which is dependent on a comparison between the voltage Vₗₑₐₖ and an alert voltage Vₐₗₑᵣₜ. The monitor output signal Sₐₗₑᵣₜ provides an indication of whether there is a leakage current at the first or second input terminals 18, 19 and, if there is a leakage current, the value of the leakage current. This monitor output signal Sₐₗₑᵣₜ can thus be used to alert a user to a significant leakage current which may require replacement of the thermocouple or other component.

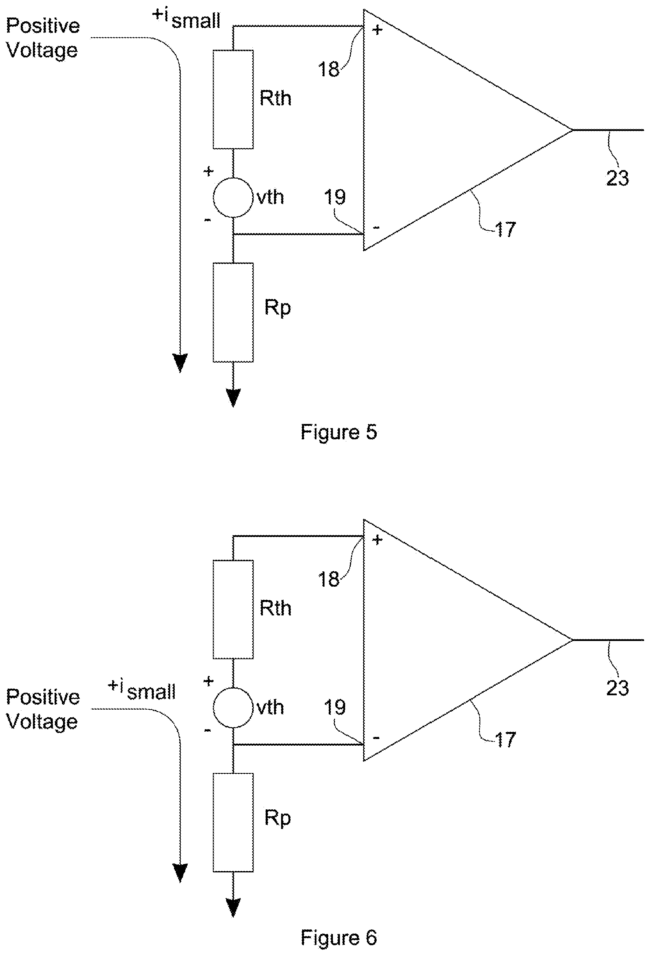

The operation of the temperature monitoring system of an example of this disclosure will now be described with reference to figures 5-9 of the accompanying drawings. For clarity, the diodes Dₙ, Dₚ and the Zener diodes Zₙ, Zₚ are omitted in figures 5-9.

Figure 5 shows how the protection circuit 25 diverts a leakage current +iₛₘₐₗₗ which induces a positive voltage across the first and second input terminals 18, 19 of the differential amplifier 17. The leakage current +iₛₘₐₗₗ makes the voltage at the first input terminal 18 more positive with respect to the second input terminal 19, leading to an increased reported temperature. The leakage current +iₛₘₐₗₗ is small enough to not raise the voltage at the first or second input terminals 18, 19 to the breakdown voltages at which the first and second Zener diodes Zₚₙ, Zₚ conduct.

The leakage current +iₛₘₐₗₗ flows through the thermocouple 21 and the second resistor Rₚ, as well as the second diode Dₚ (not shown). The effect of this positive voltage differential across the first and second input terminals 18, 19 is for the differential amplifier 17 to output a high output signal which controls a heater to operate at a temperature which is at or lower than a predetermined safe temperature.

Figure 6 shows a similar operation to figure 5, but with the leakage current +iₛₘₐₗₗ flowing into the second input terminal 19. In this example, the leakage current +iₛₘₐₗₗ again produces a positive voltage at the input terminals 18, 19. The leakage current +iₛₘₐₗₗ is diverted to flow through the second resistor Rₚ, and the second diode Dₚ (not shown) to ground. The output signal produced by the differential amplifier 17 is not affected by the leakage current +iₛₘₐₗₗ.

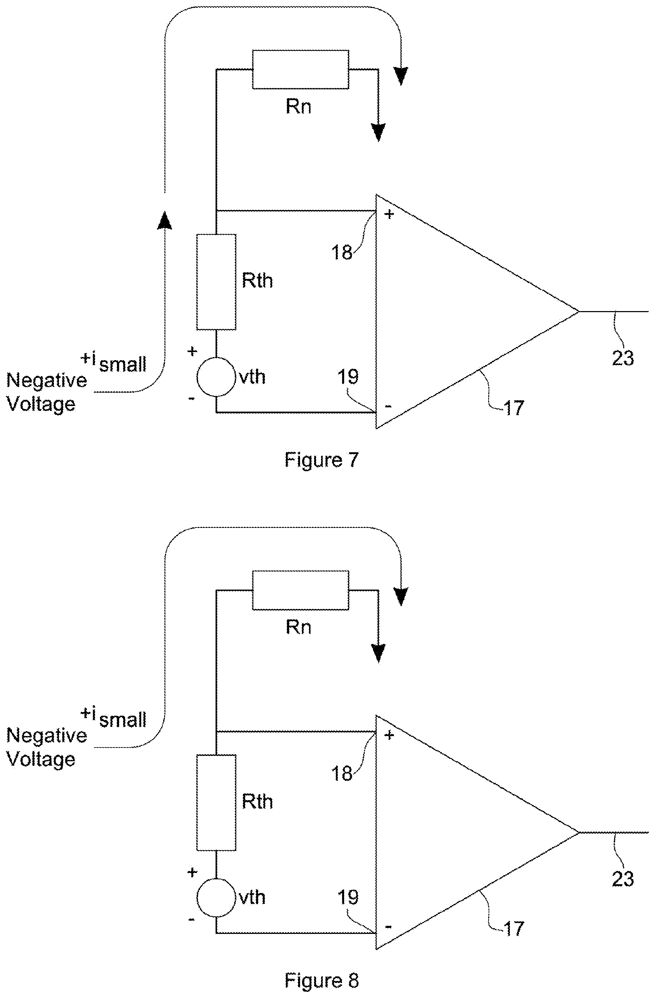

Referring now to figure 7, in the event that there is a negative leakage current at the second input terminal 19, a negative voltage is produced. The protection circuit 25 diverts the leakage current iₛₘₐₗₗ by enabling the leakage current iₛₘₐₗₗ to flow through the thermocouple 21, through the first resistor Rₙ and through the first diode Dₙ (not shown) to ground. The diversion of the leakage current iₛₘₐₗₗ in this way causes the differential amplifier 17 to output a high output signal which controls a heater to run at a temperature which is at or lower than the predetermined safe temperature.

Figure 8 shows a similar operation to figure 7, but the leakage current iₛₘₐₗₗ flows in via the first input terminal 18 of the differential amplifier 17. The leakage current iₛₘₐₗₗ is diverted to flow again through the first resistor Rₙ and the first diode Dₙ (not shown) to ground. The diversion of the leakage current iₛₘₐₗₗ in this way ensures that the output from the differential amplifier 17 is unaffected by the leakage current iₛₘₐₗₗ.

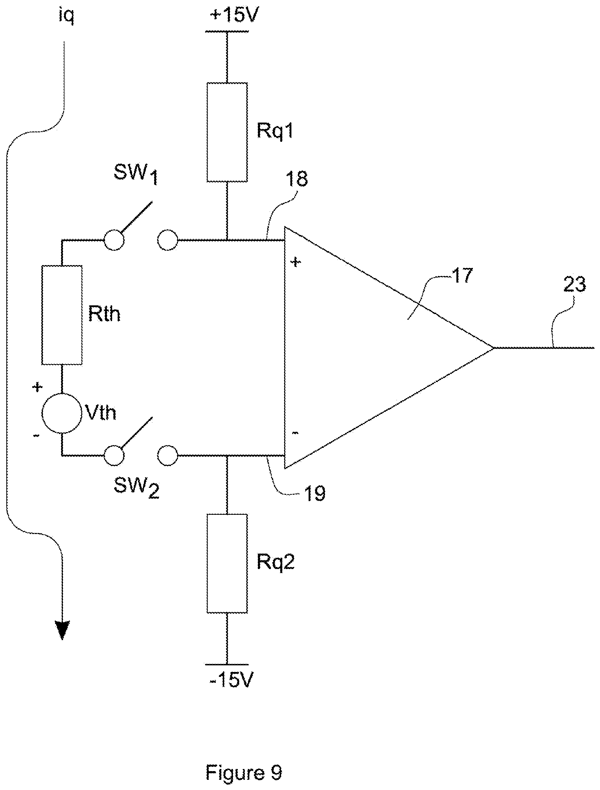

Figure 9 of the accompanying drawings shows how a small quiescent current i_{q} flows when switches SW₁ and SW₂ are closed (i.e. when thermocouple connected) through the third resistor R_{q1} and the fourth resistor R_{q2}. When either switch SW₁ or SW₂ is open there is no current flow (i_{q} = 0) (e.g. in the event that one or both of the first terminal 20 or the second terminal 22 of the thermocouple 21 is disconnected from the input terminals 18, 19). In this third mode of operation, when the the quiescent current i_{q} is zero in the event that the thermocouple 21 is disconnected, the differential amplifier 18 outputs a high output temperature sense signal. The high output temperature sense signal causes the heater to switch off to minimise or prevent damage caused by the heater.

The first and second Zener diodes Zₙ, Zₚ ensure that a large current flowing into or out from the protection circuit 25 does not cause the maximum input voltage of the differential amplifier 17 to be exceeded. Depending on the polarity of the large current, the large current produces a voltage which rises until the voltage reaches the breakdown voltage of either the first Zener diode Zₙ (a fifth mode of operation) or the second Zener diode Zₚ (a fourth mode of operation). When the breakdown voltage is reached, either the first Zener diode Zₙ or the second Zener diode Zₚ conducts in the reverse direction to allow the large current to flow to ground (or another voltage within the working range of the differential amplifier). This in turn limits the voltage at the input terminals 18, 19 to close to the breakdown voltage, thereby protecting the differential amplifier 17 from damage by the large current and causing the reported temperature to be higher than the actual temperature so that the heater runs cooler than the requested setpoint.

The range of currents for which the protection circuit 25 is in the first mode (or the second mode) and for which the protection circuit 25 is in the fourth mode 4 (or the fifth mode) will now be discussed since the currents in each mode enable the functionality of the protection circuit 25.

In the first mode (or the second mode) the absolute voltage (with respect to ground) is roughly (excluding the diode drop) proportional to the leakage current (and hence the error in the reported temperature at the output terminal 23). This information can be used to correct the reported temperature, nulling the error and/or allow some useful behaviour at a predetermined leakage current (such as warning the user or notifying them that a part needs replacing).

Once the protection circuit 25 transitions to the fourth mode (or the fifth mode) no further information about the level of leakage is indicated by the voltages at the input terminals 18 and 19, but as previously described the protection circuit 25 can remain safely operational, albeit at lower temperature than the requested setpoint.

When used in this specification and claims, the terms "comprises" and "comprising" and variations thereof mean that the specified features, steps or integers are included. The terms are not to be interpreted to exclude the presence of other features, steps or components.

## Claims

1. A temperature monitoring system for use with a thermocouple and a heater controller to control a heater, wherein the system comprises:
a differential amplifier (17) which comprises:
a first input terminal (18) which is configured to connect to a first terminal (20) of the thermocouple (21);
a second input terminal (19) which is configured to connect to a second terminal (22) of the thermocouple (21); and
an output terminal (23) which is configured to provide a temperature sense signal to the heater controller (24) to control the heater, wherein the differential amplifier (17) is configured to generate the temperature sense signal in response to a difference between a first voltage at the first input terminal (18) and a second voltage at the second input terminal (19), wherein the system further comprises:
a protection circuit (25) which is connected to the first input terminal (18) and the second input terminal (19),
**characterized in that** the protection circuit (25) comprises:
a first resistor (Rₙ) and a first diode (Dₙ) which are connected in series, wherein a terminal of the first resistor (Rₙ) is connected to the first input terminal (18) and the cathode of the first diode (Dₙ) is towards a positive terminal (20) of the thermocouple (21); and
a second resistor (Rₚ) and a second diode (Dₚ) which are connected in series, wherein a terminal of the second resistor (Rₚ) is connected to the second input terminal (19) and the cathode of the second diode (Dₚ) is towards ground,
the protection circuit (25) being configured to operate in:
a first mode in the event that a leakage current flows into the first input terminal (18) or the second input terminal (19); and
a second mode in the event that a leakage current flows out from the first input terminal (18) or the second input terminal (19),
wherein, in the first mode or the second mode, the protection circuit (25) controls the differential amplifier (17) to output a temperature sense signal which controls the heater to operate at a temperature at or below a predetermined temperature to reduce the risk of damage being caused by the heater.

2. The system of claim 1, wherein the protection circuit (25) is configured to operate in:
a third mode in the event that at least one of the first input terminal (18) or the second input terminal (19) is electrically disconnected from the thermocouple (21), wherein in the third mode the protection circuit (25) controls the differential amplifier (17) to output a temperature sense signal which controls the heater to switch off to reduce the risk of damage being caused by the heater.

3. The system of claim 2, wherein the protection circuit (25) comprises:
a third resistor (R_{q1}) comprising a first terminal connected to a positive voltage power rail and a second terminal connected to the first input terminal (18) of the differential amplifier (17); and
a fourth resistor (R_{q2}) comprising a first terminal connected to the second input terminal (19) of the differential amplifier (17) and a second terminal connected to ground or a negative voltage power rail.

4. The system of any one of the preceding claims, wherein the protection circuit (25) comprises:
a first Zener diode (Zₙ) connected in parallel with the first resistor (Rₙ) wherein the cathode of the first Zener diode (Zₙ) is away from the positive terminal (20) of the thermocouple (21).

5. The system of any one of the preceding claims, wherein the protection circuit (25) comprises:
a second Zener diode (Zₚ) connected in parallel with the second resistor (Rₚ) wherein the cathode of the second Zener diode (Zₚ) is away from ground

6. The system of any one of the preceding claims, wherein the protection circuit (25) is configured to monitor voltages at the first and/or second input terminals (18, 19) with respect to ground and to use the monitored voltages to compensate or null the error, provide a diagnostic current measurement and/or provide a warning signal if the monitored voltages are indicative of a leakage current in excess of a predetermined threshold.

7. An integrated circuit comprising the temperature monitoring system of any one of the preceding claims.

8. A heating apparatus comprising:
a temperature monitoring system according to any one of claims 1 to 6;
a heater controller (24) which is connected to the output terminal (23) of the differential amplifier (17);
a heater which is connected to the heater such that the heater is controlled by the heater controller (24) in response to the temperature sense signal; and
a thermocouple (21) comprising a first terminal which is connected to the first input terminal (18) of the differential amplifier (17) and a second terminal which is connected to the second input terminal (19) of the differential amplifier (17).

9. The heating apparatus of claim 8, wherein the thermocouple (21) is at least partly received within a recess in the heater, the thermocouple (21) being electrically insulated from the heater by an electrically insulating layer (10).

10. An electrospray ionisation source comprising the heating apparatus of claim 8 or claim 9.

11. A mass spectrometry system comprising the heating apparatus of claim 8 or claim 9.

## Patentansprüche

1. Temperaturüberwachungssystem zur Verwendung mit einem Thermoelement und einer Heizersteuervorrichtung, um einen Heizer zu steuern, wobei das System umfasst:
einen Differenzverstärker (17), der umfasst:
eine erste Eingangsklemme (18), die konfiguriert ist, um mit einer ersten Klemme (20) des Thermoelements (21) zu verbinden;
eine zweite Eingangsklemme (19), die konfiguriert ist, um mit einer zweiten Klemme (22) des Thermoelements (21) zu verbinden; und
eine Ausgangsklemme (23), die konfiguriert ist, um ein Temperaturerfassungssignal an die Heizersteuervorrichtung (24) bereitzustellen, um den Heizer zu steuern, wobei der Differenzverstärker (17) konfiguriert ist, um das Temperaturerfassungssignal als Reaktion auf eine Differenz zwischen einer ersten Spannung an der ersten Eingangsklemme (18) und einer zweiten Spannung an der zweiten Eingangsklemme (19) zu erzeugen, wobei das System ferner umfasst:
eine Schutzschaltung (25), die mit der ersten Eingangsklemme (18) und der zweiten Eingangsklemme (19) verbunden ist, **dadurch gekennzeichnet, dass** die Schutzschaltung (25) umfasst:
einen ersten Widerstand (Rₙ) und eine erste Diode (Dₙ), die in Reihe verbunden sind, wobei eine Klemme des ersten Widerstands (Rₙ) mit der ersten
Eingangsklemme (18) verbunden ist und die Kathode der ersten Diode (Dₙ) sich in Richtung einer positiven Klemme (20) des Thermoelements (21) befindet; und
ein zweiter Widerstand (Rₚ) und eine zweite Diode (Dₚ), die in Reihe verbunden sind, wobei eine Klemme des zweiten Widerstands (Rₚ) mit der zweiten Eingangsklemme (19) verbunden ist und die Kathode der zweiten Diode (Dₚ) in Richtung Erde ist,
wobei die Schutzschaltung (25) konfiguriert ist, um betrieben zu werden in:
einem ersten Modus für den Fall, dass ein Leckstrom in die erste Eingangsklemme (18) oder die zweite Eingangsklemme (19) fließt; und
einem zweiten Modus für den Fall, dass ein Leckstrom aus der ersten Eingangsklemme (18) oder der zweiten Eingangsklemme (19) fließt,
wobei in dem ersten oder in dem zweiten Modus die Schutzschaltung (25) den Differenzverstärker (17) steuert, um ein Temperaturerfassungssignal auszugeben, das den Heizer steuert, um bei einer Temperatur auf oder unter einer zuvor bestimmten Temperatur betrieben zu werden, um das Risiko einer durch den Heizer verursachten Beschädigung zu verringern.

2. System nach Anspruch 1, wobei die Schutzschaltung (25) konfiguriert ist, um betrieben zu werden in:
einem dritten Modus für den Fall, dass mindestens eine der ersten Eingangsklemme (18) oder der zweiten Eingangsklemme (19) von dem Thermoelement (21) elektrisch getrennt ist, wobei in dem dritten Modus die Schutzschaltung (25) den Differenzverstärker (17) steuert, um ein Temperaturerfassungssignal auszugeben, das den Heizer steuert, um abzuschalten, um das Risiko einer durch den Heizer verursachten Beschädigung zu verringern.

3. System nach Anspruch 2, wobei die Schutzschaltung (25) umfasst:
einen dritten Widerstand (R_{q1}), umfassend eine erste Klemme, die mit einer Arbeitsschiene einer positiven Spannung verbunden ist, und eine zweite Klemme, die mit der ersten Eingangsklemme (18) des Differenzverstärkers (17) verbunden ist; und
einen vierten Widerstand (R_{q2}), umfassend eine erste Klemme, die mit der zweiten Eingangsklemme (19) des Differenzverstärkers (17) verbunden ist, und eine zweite Klemme, die mit Erde oder einer Arbeitsschiene einer negativen Spannung verbunden ist.

4. System nach einem der vorstehenden Ansprüche, wobei die Schutzschaltung (25) ferner umfasst:
eine erste Zenerdiode (Zₙ), die mit dem ersten Widerstand (Rₙ) parallel verbunden ist, wobei die Kathode der ersten Zenerdiode (Zₙ) von der positiven Klemme (20) des Thermoelements (21) entfernt ist.

5. System nach einem der vorstehenden Ansprüche, wobei die Schutzschaltung (25) ferner umfasst:
eine zweite Zenerdiode (Zₚ), die mit dem zweiten Widerstand (Rₚ) parallel verbunden ist, wobei die Kathode der zweiten Zenerdiode (Zₚ) von Erde entfernt ist.

6. System nach einem der vorstehenden Ansprüche, wobei die Schutzschaltung (25) konfiguriert ist, um Spannungen an der ersten und/oder der zweiten Eingangsklemme (18, 19) hinsichtlich Erde zu überwachen und um die überwachten Spannungen zu verwenden, um den Fehler zu kompensieren oder aufzuheben, eine diagnostische Strommessung bereitzustellen und/oder ein Warnsignal bereitzustellen, falls die überwachten Spannungen einen Leckstrom anzeigen, der einen zuvor bestimmten Schwellenwert überschreitet.

7. Integrierte Schaltung, umfassend das Temperaturüberwachungssystem nach einem der vorstehenden Ansprüche.

8. Heizeinrichtung, umfassend:
ein Temperaturüberwachungssystem nach einem der Ansprüche 1 bis 6;
eine Heizersteuervorrichtung (24), die mit der Ausgangsklemme (23) des Differenzverstärkers (17) verbunden ist;
ein Heizer, die mit dem Heizer derart verbunden ist, dass der Heizer durch die Heizersteuervorrichtung (24) als Reaktion auf das Temperaturerfassungssignal gesteuert wird; und
ein Thermoelement (21), umfassend eine erste Klemme, die mit der ersten Eingangsklemme (18) des Differenzverstärkers (17) verbunden ist, und eine zweiten Klemme, die mit der zweiten Eingangsklemme (19) des Differenzverstärkers (17) verbunden ist.

9. Heizeinrichtung nach Anspruch 8, wobei das Thermoelement (21) mindestens teilweise innerhalb einer Aussparung in dem Heizer aufgenommen ist, wobei das Thermoelement (21) durch eine elektrisch isolierende Schicht (10) von dem Heizer elektrisch isoliert ist.

10. Elektrospray-Ionisationsquelle, umfassend die Heizeinrichtung nach Anspruch 8 oder 9.

11. Massenspektrometriesystem, umfassend die Heizeinrichtung nach Anspruch 8 oder 9.

## Revendications

1. Système de surveillance de température destiné à être utilisé avec un thermocouple et un dispositif de commande de chauffage qui permet de commander un dispositif de chauffage, dans lequel le système comprend :
un amplificateur différentiel (17) qui comprend :
une première borne d'entrée (18) configurée pour être connectée à une première borne (20) du thermocouple (21) ;
une seconde borne d'entrée (19) configurée pour être connectée à une seconde borne (22) du thermocouple (21) ; et
une borne de sortie (23) configurée pour fournir un signal de détection de température au dispositif de commande de chauffage (24) afin de commander le dispositif de chauffage, dans lequel l'amplificateur différentiel (17) est configuré pour générer le signal de détection de température en réponse à une différence entre une première tension à la première borne d'entrée (18) et une seconde tension à la seconde borne d'entrée (19), dans lequel le système comprend en outre :
un circuit de protection (25) qui est connecté à la première borne d'entrée (18) et à la seconde borne d'entrée (19), **caractérisé en ce que** le circuit de protection (25) comprend :
une première résistance (Rₙ) et une première diode (Dₙ) connectées en série, dans lequel une borne de la première résistance (Rₙ) est connectée à la première borne d'entrée (18) et la cathode de la première diode (Dₙ) est orientée vers une borne positive (20) du thermocouple (21) ; et
une deuxième résistance (Rₚ) et une seconde diode (Dₚ) connectées en série, dans lequel une borne de la deuxième résistance (Rₚ) est connectée à la seconde borne d'entrée (19) et la cathode de la seconde diode (Dₚ) est orientée vers la terre,
le circuit de protection (25) est configuré pour fonctionner en :
un premier mode dans le cas où un courant de fuite circule dans la première borne d'entrée (18) ou la seconde borne d'entrée (19) ; et
un deuxième mode dans le cas où un courant de fuite sort de la première borne d'entrée (18) ou de la seconde borne d'entrée (19),
dans lequel, dans le premier mode ou le deuxième mode, le circuit de protection (25) commande l'amplificateur différentiel (17) pour qu'il émette un signal de détection de température qui commande le fonctionnement du dispositif de chauffage à une température égale ou inférieure à une température prédéterminée afin de réduire le risque de dommages causés par le dispositif de chauffage.

2. Système selon la revendication 1, dans lequel le circuit de protection (25) est configuré pour fonctionner en :
un troisième mode dans le cas où au moins l'une de la première borne d'entrée (18) ou de la seconde borne d'entrée (19) est déconnectée électriquement du thermocouple (21), dans lequel, dans le troisième mode, le circuit de protection (25) commande à l'amplificateur différentiel (17) afin qu'il émette un signal de détection de température qui commande l'arrêt du dispositif de chauffage afin de réduire le risque de dommages causés par le dispositif de chauffage.

3. Système selon la revendication 2, dans lequel le circuit de protection (25) comprend :
une troisième résistance (R_{q1}) comprenant une première borne connectée à un rail d'alimentation à tension positive et une seconde borne connectée à la première borne d'entrée (18) de l'amplificateur différentiel (17) ; et
une quatrième résistance (R_{q2}) comprenant une première borne connectée à la seconde borne d'entrée (19) de l'amplificateur différentiel (17) et une seconde borne connectée à la terre ou à un rail d'alimentation à tension négative.

4. Système selon l'une quelconque des revendications précédentes, dans lequel le circuit de protection (25) comprend :
une première diode Zener (Zₙ) connectée en parallèle avec la première résistance (Rₙ), dans lequel la cathode de la première diode Zener (Zₙ) est éloignée de la borne positive (20) du thermocouple (21).

5. Système selon l'une quelconque des revendications précédentes, dans lequel le circuit de protection (25) comprend :
une seconde diode Zener (Zₚ) connectée en parallèle avec la deuxième résistance (Rₚ) dans lequel la cathode de la seconde diode Zener (Zₚ) est éloignée de la terre

6. Système selon l'une quelconque des revendications précédentes, dans lequel le circuit de protection (25) est configuré pour surveiller des tensions aux première et/ou seconde bornes d'entrée (18, 19) par rapport à la terre et utiliser les tensions surveillées pour compenser ou annuler l'erreur, fournir une mesure de courant de diagnostic et/ou émettre un signal d'avertissement si les tensions surveillées indiquent un courant de fuite supérieur à un seuil prédéterminé.

7. Circuit intégré comprenant le système de surveillance de température selon l'une quelconque des revendications précédentes.

8. Appareil de chauffage, comprenant :
un système de surveillance de température selon l'une quelconque des revendications 1 à 6 ;
un dispositif de commande de chauffage (24) qui est connecté à la borne de sortie (23) de l'amplificateur différentiel (17) ;
un dispositif de chauffage connecté au dispositif de chauffage de telle sorte que le dispositif de chauffage est commandé par le dispositif de commande de chauffage (24) en réponse au signal de détection de température ; et
un thermocouple (21) comprenant une première borne reliée à la première borne d'entrée (18) de l'amplificateur différentiel (17) et une seconde borne reliée à la seconde borne d'entrée (19) de l'amplificateur différentiel (17).

9. Appareil de chauffage selon la revendication 8, dans lequel le thermocouple (21) est au moins partiellement reçu dans une cavité du dispositif de chauffage, le thermocouple (21) étant électriquement isolé du dispositif de chauffage par une couche électriquement isolante (10).

10. Source d'ionisation électrospray comprenant l'appareil de chauffage selon la revendication 8 ou la revendication 9.

11. Système de spectrométrie de masse comprenant l'appareil de chauffage selon la revendication 8 ou la revendication 9.
